# EUROPEAN PATENT APPLICATION

(11) **EP 2 827 187 A1**
(43) Date of publication of application: **21.01.2015**
(21) Application number: 13761688.4
(22) Date of filing: 13.02.2013
(51) Int. Cl.: G02F 1/13357, F21S 2/00, G02F 1/1333, H04M 1/02, F21Y 101/02

(54) **DISPLAY DEVICE AND PORTABLE TERMINAL DEVICE**

(30) Priority: 12.03.2012 JP 2012054244
(71) Applicant: NEC Corporation, Tokyo 108-8001 (JP); NTT Docomo, Inc., Tokyo 100-6150 (JP)
(72) Inventor: SHIRAISHI, Mitsutaka, Kanagawa 2118666 (JP)
(74) Representative: Vossius & Partner
(86) International application number: PCT/JP2013/000781
(87) International publication number: WO 2013/136661

(57) **Abstract**

This LCD module (120) includes a light guide plate disposition area (140a) where a light guide plate (141) that emits planar-like light to the back surface of an LCD panel (130) is disposed, and a light source disposition area (140b) where a plurality of light sources (143) that emit point-like light to the side of the light guide plate (141) are disposed. The light source disposition area (140b) includes a cutout (144), and the light source (143) near the cutout (144) from among the plurality of light sources (143) is disposed so that the emitted from light is guided to the light guide plate (141) located near the cutout (144). Therefore, it is possible to reduce the unevenness in illumination.

## Description

### Technical Field

The present invention relates to a display device and a mobile terminal device, and in particular, it relates to a display device and a mobile terminal device that have a plurality of light sources disposed on a side surface of a light guide plate.

### Background Art

In recent years, use of mobile terminal devices such as mobile phones, smartphones, and tablet terminals has become wide spread. As a display device mounted on a mobile terminal device, a liquid crystal display device capable of reducing the power consumption and thickness of the mobile terminal device is used.

In such a liquid crystal display device, as a light source for illuminating the liquid crystal display panel, a plurality of LEDs is often used. Further, the side light (edge light) method is employed as the irradiation method of the light source.

The side light method means a method in which a light guide plate is disposed on the back of the liquid crystal display panel so that it is irradiated by a light source such as a plurality of LEDs that are disposed on a side surface portion of the light guide plate. The side light method is generally employed in the mobile terminal device because it is possible to reduce the thickness of the mobile terminal device more than when the back light method where the light source is disposed at the back of the light guide plate is used.

For example, as a display device of a mobile phone, Patent Literature 1 discloses a liquid crystal display device using the side light method.

### Citation List

### Patent Literature

[Patent Literature 1] Japanese Unexamined Patent Application Publication No. 2009-16127

### Summary of Invention

### Technical Problem

In recent years, mobile terminal devices have been becoming thinner and thinner. Further, the screen size of the liquid crystal display device has increased to a size nearly the same as the size of the housing of the mobile terminal device.

However, if the large screen of the liquid crystal display device is realized while reducing the thickness of the mobile terminal device, cases occur in which the respective positions where the parts of the liquid crystal display device can be disposed are limited due to interfere between the parts of the mobile terminal device and the parts of the liquid crystal display device. In particular, there is a problem that uneven brightness in the liquid crystal display device occurs due to the restriction of the position of the light source of a liquid crystal display device.

In view of the above problem, an object of the present invention is to provide a mobile terminal device and a display device capable of reducing the unevenness in illumination.

### Solution to Problem

A display device according to an embodiment of the present invention comprises a light guide plate disposition area where a light guide plate that emits a planar-like light to a back surface of a display panel is disposed, and a light source disposition area where a plurality of light sources that emit a point-like light to the side of the light guide plate are disposed, wherein the light source disposition area includes a cutout part, and a light source near the cutout part from among the plurality of the light sources is disposed so that the light emitted from the light source is guided to the light guide plate located near the cutout part.

A display device according to another embodiment of the present invention comprises a light guide plate disposition area where a light guide plate that emits a planar-like light to a back surface of a display panel is disposed, and a light source disposition area where a plurality of light sources that emit a point-like light to the side of the light guide plate are disposed, wherein the light source disposition area includes a cutout part, and a light source near the cutout part from among the plurality of the light sources is disposed so that an emission direction of the light source is inclined obliquely with respect to a direction perpendicular to the extending direction of the light guide plate.

A display device according to another embodiment of the present invention, comprises a light guide plate disposition area where a light guide plate that emits a planar-like light to a back surface of a display panel is disposed, and a light source disposition area where a plurality of light sources that emit a point-like light to the side of the light guide plate are disposed, wherein the light source disposition area includes a cutout part, and a light source near the cutout part from among the plurality of the light sources is disposed so that it is inclined obliquely with respect to the extending direction of the light guide plate as viewed from an adjacent light source.

A mobile terminal device according to another embodiment of the present invention comprises a housing having a cavity part, a frame member that is fixed to the housing through the cavity part, a substrate and a battery that are fixed to the frame member through the cavity part, and a display unit that seals the cavity part with the housing, wherein the display unit comprises a light guide plate disposition area where a light guide plate that emits a planar-like light to a back surface of a display panel is disposed, and a light source disposition area where a plurality of light sources that emit a point-like light to the side of the light guide plate are disposed, wherein the light source disposition area includes a cutout part, and a light source near the cutout part from among the plurality of the light sources is disposed so that the light emitted from the light source is guided to the light guide plate located near the cutout part.

### Advantageous Effects of Invention

According to the present invention, it is possible to provide a mobile terminal device and a display device by which the unevenness in illumination can be reduced.

### Brief Description of Drawings

Fig. 1A is an example of a front external view of a mobile terminal device according to an embodiment of the present invention;
Fig. 1B is an example of a side external view of the mobile terminal device according to the embodiment of the present invention;
Fig. 2 is an example of an exploded perspective diagram of the mobile terminal device according to the embodiment of the present invention;
Fig. 3A is an example of a front perspective diagram of the mobile terminal device according to the embodiment of the present invention;
Fig. 3B is an example of a side perspective diagram of the mobile terminal device according to the embodiment of the present invention;
Fig. 4 is an example of a cross-section diagram of the mobile terminal device according to the embodiment of the present invention;
Fig. 5A is an example of a front diagram of a display unit according to the embodiment of the present invention;
Fig. 5B is an example of a side diagram of the display unit according to the embodiment of the present invention;
Fig. 6A is an example of a front diagram of a LCD module according to an embodiment of the present invention;
Fig. 6B is an example of a side diagram of the LCD module according to an embodiment of the present invention;
Fig. 6C is an example of a side diagram of the LCD module according to an embodiment of the present invention;
Fig. 7A is an example of a front diagram of a backlight unit according to the embodiment of the present invention;
Fig. 7B is an example of a side diagram of the backlight unit according to the embodiment of the present invention;
Fig. 7C is an example of a side diagram of the backlight unit according to the embodiment of the present invention;
Fig. 8A is an example of the enlarged front diagram of an area for disposing the light source according to the embodiment of the present invention;
Fig. 8B is another example of the enlarged front diagram of an area for disposing the light source according to the embodiment of the present invention;
Fig. 8C is still another example of the enlarged front diagram of an area for disposing the light source according to the embodiment of the present invention;
Fig. 9A is an example of an enlarged cross-sectional diagram of the mobile terminal device according to the embodiment of the present invention;
Fig. 9B is an example of the enlarged cross-sectional diagram of the mobile terminal device according to the embodiment of the present invention;
Fig. 9C is an example of the enlarged cross-sectional diagram of the mobile terminal device according to the embodiment of the present invention;
Fig. 10A is a front diagram of a reference example for explaining the backlight unit according to the embodiment of the present invention;
Fig. 10B is a side diagram of a reference example for explaining the backlight unit according to the embodiment of the present invention; and
Fig. 10C is a side diagram of a reference example for explaining the backlight unit according to the embodiment of the present invention.

### Description of Embodiments

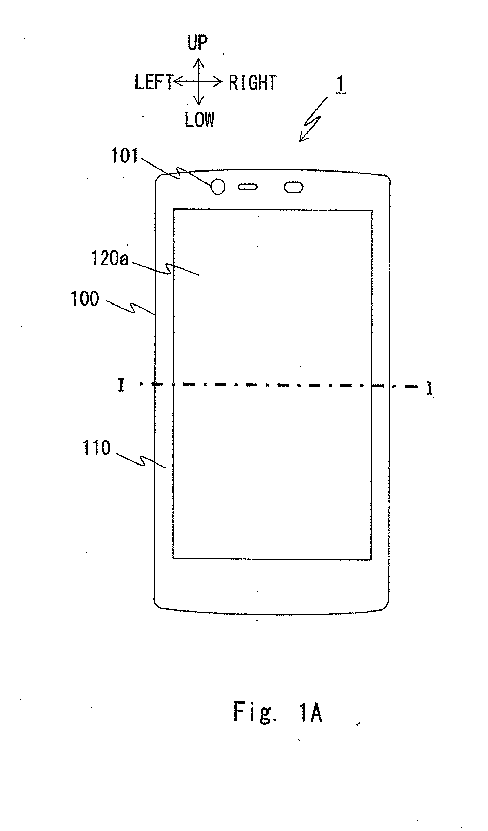

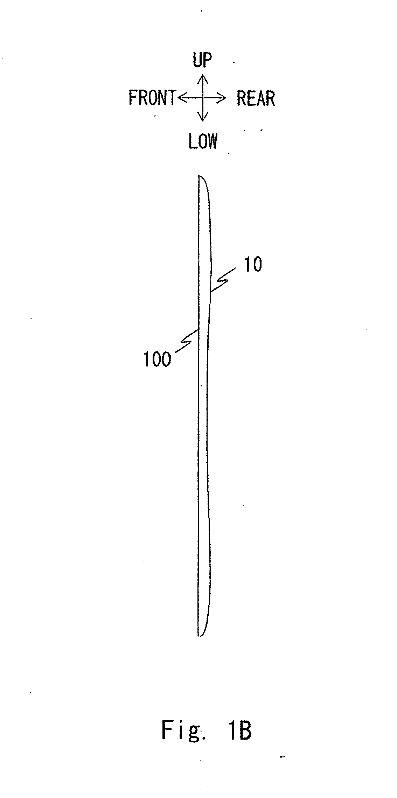

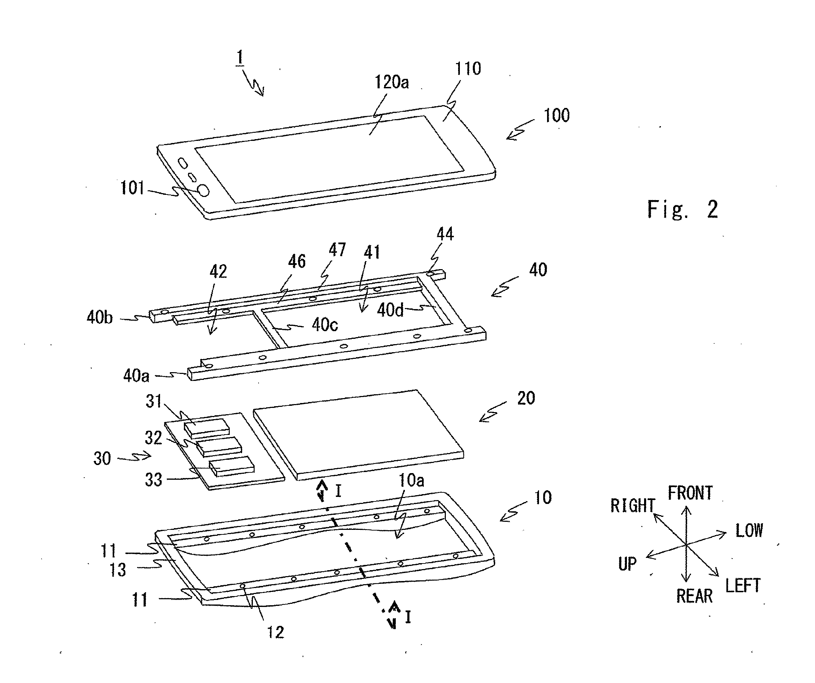

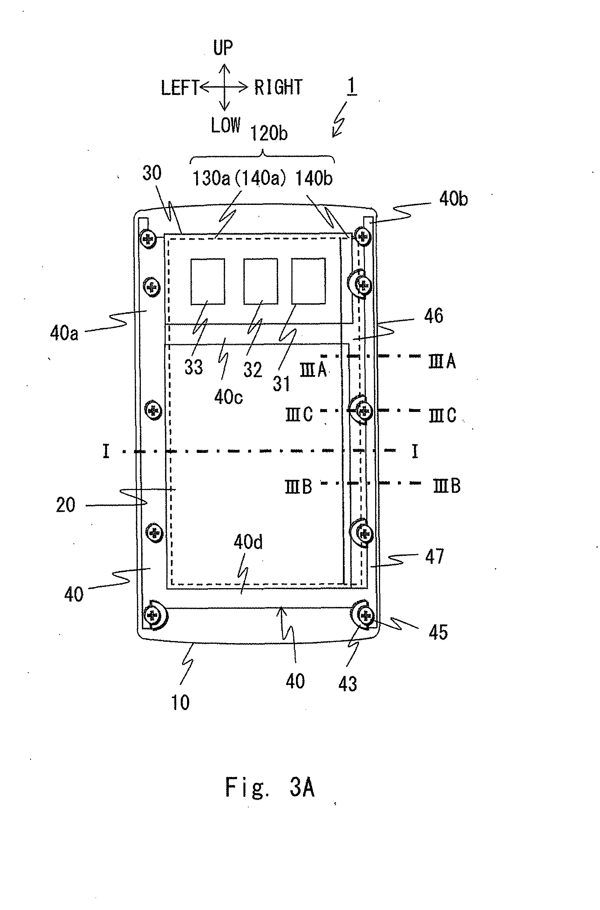

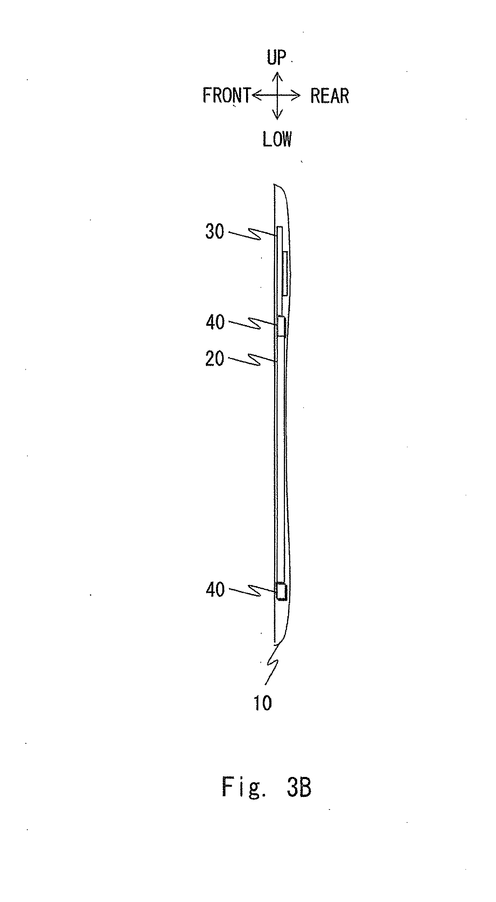

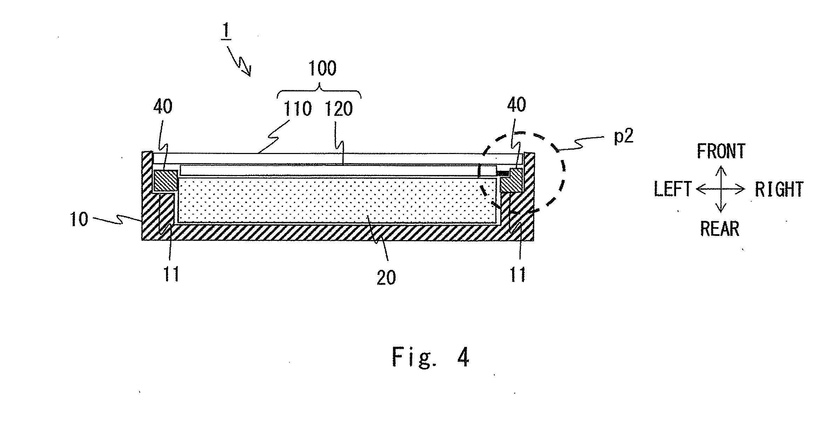

Hereinafter, exemplary embodiments will be explained with reference to the diagrams. Fig. 1A is a front external view of a mobile terminal device 1 according to an embodiment, and Fig 1B is a side external view of it. Fig 2 is an exploded perspective diagram of the mobile terminal device 1 shown in Figs. 1A and 1B. Fig. 3A is a front perspective diagram of the mobile terminal device shown in Figs. 1A and 1B, and Fig. 3B is a side perspective diagram of it. Fig 4 is a I-I cross-section diagram of Figs. 1A, 1B, 2, 3B and 3A.

For example, the mobile terminal devise 1 according to this embodiment is a terminal device that a user can carry, such as smartphones, tablet type mobile terminal devises, mobile phones, game machines, and electronic book readers.

As shown in the external views in Figs. 1A and 1B, the mobile terminal device 1 comprises a housing 10 and a display unit 100. The mobile terminal device 1 displays the GUI such as an icon in a display area 120a of the display unit 100, and performs a function corresponding to an operation when a user touches the touch panel 110 with a finger or the like and operates the GUI. Further, a hole 101 is a hole for a camera, a microphone, a speaker and so on, and pictures can be taken through this hole and sounds can be inputted and outputted through this hole.

Note that, in the mobile terminal device 1, the display unit 100 side is called a front side (the display surface side or front surface side), and the housing 10 side opposite to the display unit 100 is called a rear side (back side). Further, in the mobile terminal device 1, the side on which the hole 101 of the display unit 100 is formed is called an upper side, and a side opposite thereto is called a lower side. Furthermore, sides of the direction (short side direction) orthogonal to the upper-lower direction (long side direction) are called right side and left side, respectively. In this example, the mobile terminal device 1 has substantially a rectangular shape in which the long side direction is the upper-lower direction.

As shown in Fig. 2, in the mobile terminal device 1 according to this embodiment, a battery 20, a substrate 30, and a frame member 40 are accommodated in the space formed by bonding the display unit 100 and the housing 10 together. That is, the housing 10 is formed into a concave shape and therefore has a cavity part 10a. Further, the cavity part 10a is sealed by the display unit 100 and the housing 10. In the cavity part 10a, the frame member 40 is fixed to the housing 10, and the substrate 30 and the battery 20 are fixed to the frame member 40.

For example, the battery 20 is a lithium-ion secondary battery. The battery 20 is fixed to the frame member 40 by using screws or the like (not shown). For example, in the peripheral part of the battery 20, a plurality of mounting holes are formed at positions corresponding to the mounting holes of the frame member 40, and the battery 20 is fixed to the frame member 40 by inserting the screws through the mounting holes (not shown).

The battery 20 is a rectangle in a front view (foreside view), and is substantially rectangular in shape to conform to the shape of the housing 10. The battery 20 has such a size that it can be accommodated in the cavity part 10a of the housing 10. In order to maximize the size of the battery 20, the battery 20 extends from the vicinity of the lower end of the substrate 30 to the vicinity of the lower end of the housing 10 in the upper-lower direction (Figs. 3A and 3B), and extends from the vicinity of the right end of the housing 10 to the vicinity of the left end thereof in the left-right direction (Figs. 3A, 3B and 4). Further, the battery 20 has a thickness that extends from the vicinity of the back surface (rear end) of the display unit 100 (LCD module 120) to the vicinity of the front surface (front end) of the bottom part of the housing 10 in the front-rear direction (thickness direction). By increasing the size of the battery 20, it is possible to increase the capacity of the battery and operate the mobile terminal device 1 for a long time. Further, by placing the battery 20 at the middle of the left-right direction of the housing 10, a user can grip it stably because the center of gravity is located in its center.

In the substrate 30, circuit elements 31, 32 and 33 are provided. Here, for example, the circuit elements 31, 32 and 33 are an integrated circuit device including various components such as a processor for operating the mobile terminal device 1, a memory and a communication module, and an imaging device for a camera or the like. Similar to the battery 20, the substrate 30 is fixed to the frame member 40 using screws or the like (not shown). For example, in the peripheral part of the substrate 30, a plurality of mounting holes are formed at positions corresponding to the mounting holes of the frame member 40, and the substrate 30 is fixed to the frame member 40 by inserting the screws through the mounting holes (not shown).

The frame member 40 is a holding member (fixed member) having a frame shape for holding (fixing) the battery 20 and the substrate 30. The frame member 40 is preferably formed of a metal material because it requires some strength. Examples of the material used for the frame member 40 include magnesium alloys, aluminum, stainless steel and the like. Note that the use of a magnesium alloy is preferable in consideration of the resulting reduction in weight of the mobile terminal device 1. Further, if the strength of the frame member 40 can be ensured, it may also be formed from a resin material.

The frame member 40 has an opening part 41 at a position corresponding to the position where the battery 20 is mounted. The opening part 41 has a shape and size corresponding to the surface (front surface) of the battery 20 (Figs 3A and 3B). Further, by fixing the battery 20 (a part of the battery) in this opening part 41, it is possible to effectively utilize the space inside the housing and to thus achieve a reduction in thickness.

For example, in the frame member 40, a plurality of the mounting holes for fixing the battery 20 to the frame member 40 with screws or the like are formed at positions corresponding to the mounting holes of the battery 20. The battery 20 is fixed to the frame member 40 from the side (rear side) on which the housing 10 is provided with a screw or the like.

The frame member 40 has an opening part 42 at a position corresponding to the position where the substrate 30 including the circuit elements 31, 32 and 33 is mounted. The opening part 42 has a shape and size corresponding to the surface (front surface) of the substrate 30 (Figs 3A and 3B). Further, by fixing the substrate 30 (a part of the substrate) in the opening part 42, it is possible to effectively utilize the space inside the housing and to thus achieve a reduction in thickness.

For example, in the frame member 40, a plurality of the mounting holes for fixing the substrate 30 to a frame member 40 with screws or the like are formed at positions corresponding to the mounting holes of the substrate 30, and the substrate 30 is fixed to the frame member 40 from the side (rear side) on which the housing 10 is provided with a screw or the like.

As shown in Figs. 2, 3A and 3B, the frame member 40 is formed by integrally forming longitudinal frames which extend in the upper-lower direction and lateral frames which extend in the left-right direction. The frame member 40 may be formed as separate longitudinal frames and lateral frames. However, the frames are preferably integrally formed in order to ensure a certain degree of strength. This example includes two longitudinal frames 40a (left longitudinal frame) and 40b (right longitudinal frame), and two transverse frames 40c (upper transverse frame) and 40d (lower transverse frame).

The longitudinal frames 40a and 40b and the lateral frames 40c form the opening part 42 for fixing the substrate 30. That is, the longitudinal frames 40a and 40b and the lateral frames 40c are a fixing member for fixing the substrate 30. The longitudinal frames 40a and 40b and the lateral frames 40c and 40d form the opening part 41 for fixing the battery 20. That is, the longitudinal frames 40a and 40b and the lateral frames 40c and 40d are a fixing member for fixing the battery 20.

Further, each of the frames forming the frame member 40 has a thick part whose thickness (length in the front-back direction) is thick and a thin part whose thickness is thin. If the LCD module 120 of the display unit 100, the battery 20 and the substrate 30 are disposed close to each other (Fig. 4), the LCD module 120 and the frame member 40 interfere with each other. Therefore, by making the thin part at the portion of the frame member 40 interfering with the LCD module 120, it is possible to avoid the frame member 40 and the LCD module 120 interfering with each other and thereby to achieve the thickness reduction.

As shown in Figs. 3A and 3B, a LCD module disposition area 120b where the LCD module 120 are disposed includes a LCD panel disposition area 130a and a light guide plate disposition area 140a where the LCD panel 130 and the light guide plate 141 are disposed as described later, and a light source disposition area 140b where a plurality of the light sources 143 are disposed as described later.

In order to dispose the display area 120a in the center of the mobile terminal device 1, the LCD panel disposition area 130a is provided in the center of the display unit 100 and the housing 10 in the front view (foreside view) of the mobile terminal device 1. Then, since the LCD panel 130 and the light guide plate 141 and the whole of the upper transverse frame 40c are located close to each other, it is possible to reduce the thickness while avoiding interference that would be otherwise caused by the thickness reduction of the whole upper transverse frame 40c. The LCD panel 130 and the battery 20 have substantially the same size. In particular, the lengths of the short side (left-right direction) of the LCD panel 130 and the battery 20 are equal to each other. By disposing the LCD panel 130 and the battery 20 to overlap the center of the housing, a user can grip it stably because the center of gravity is located in its center. Further the user can view the display screen in a stable state.

The light source disposition area 140b is provided on the right side of the LCD panel disposition area 130a. Then, since a plurality of light sources 143 and a part of the right longitudinal frame 40b are close to each other, it is possible to reduce the thickness while avoiding interference that would be otherwise caused by the thickness reduction of a part of the right longitudinal frame 40b. That is, a part of the right longitudinal frame 40b which overlaps with (is opposed to) the light source disposition area 140b is a thin part 46, and a part of the right longitudinal frame 40b which does not overlap with (is not opposed to) the light source disposition area 140b is a thick part 47. The right longitudinal frame 40b has two thicknesses. Further, while ensuring the strength of the longitudinal frame 40b by the thick part 47 of the right side of the longitudinal frame 40b where the light sources are not disposed, interference with the light sources by the thin part 46 of the left side of the longitudinal frame 40b where the light sources are disposed is avoided.

The frame member 40 is fixed with screws 45 to the housing 10. In frame member 40, mounting holes 44 through which the frame member 40 is fixed to the housing 10 by the screws 45 are formed at positions corresponding to the mounting holes 12 of the housing 10.

In the example of this embodiment, the mounting holes 44 are provided in ten places in the outer peripheral part of the frame member 40. The mounting holes 44 are formed in five places in the left longitudinal frame 40a, and are formed in five places in the right longitudinal frame 40b. Not the four corners of the housing 10 but both sides of the frame member 40 are fixed using a plurality of screws 45, because the screen size becomes nearly equal to the housing size of the mobile terminal device 1. For example, the size of the LCD panel is 7 inches, which is larger than that of cell phones and smartphones in general.

Note that a fixed part 43 is formed around the mounting hole 44. The fixed part 43 is larger than the head of the screw 45, and has a circular arc shape corresponding to the head of the screw 45. When the screw 45 is clenched by the fixed part 43, the fixed part 43 and the housing 10 (fixed part 11) are abutted. Therefore, it is possible to improve fastening force (fixing force). In the example shown in Figs. 3A and 3B, one of the fixed parts 43 is formed around each of the four mounting holes 44 of the right longitudinal frame 40b, and one of the fixed parts 43 is formed around the one mounting hole 44 of the left longitudinal frame 40a.

As shown in Figs. 2 and 4, the housing 10 is configured to accommodate the battery 20, substrate 30 and the frame member 40 in the cavity part 10a of the housing 10.

The fixed part 11 for fixing the frame member 40 is provided on the inner wall of the housing 10. The fixed part 11 is formed to extend in the upper-lower direction on the right end and left end of the housing 10 corresponding to the left longitudinal frame 40a and the right longitudinal frame 40b of the frame member 40 which are fixed by the screws 45. The fixed part 11 is formed so as to be located lower than the forefront surface 13 located on the housing outer periphery, and located higher by one step from the bottom surface (back surface) of the housing 10. By providing the fixed part 11 at a position lower than the forefront surface 13 that is in contact with the display unit 100, it is possible to dispose the display unit 100 away from the mounting position of the frame member 40, and thereby, for example, to reduce the impact transmitted from the battery to the display unit 100 when the mobile terminal device is dropped.

The frame member 40 is supported on the surface (front surface) of the fixed part 11 of the housing 10, and is fixed from the side of the display unit 100 to the fixed part 11 using the screws 45. By forming the fixed part 11 into a planar shape corresponding to the longitudinal frames 40a and 40b, it is possible to increase the fixing force even more because the longitudinal frames 40a and 40b as a whole are in contact with the fixed part 11.

Mounting holes 12 are formed at positions of the fixed part 11 corresponding to the mounting holes 44 of the frame member 40. In the example shown in Fig. 2, the mounting holes 12 are provided at ten positions in the fixed portions 11. The mounting holes 12 are formed at five positions in the fixed part 11 of the right side, and are formed at five positions in the fixed part 11 of the left side.

The housing 10 includes carbon composite material (carbon fiber reinforced plastic (CFRP: Carbon Fiber Reinforced Plastics)). The carbon composite material includes 50% by volume or more of carbon, and is a composite material including fibers, binder for inorganic matters such as silica and alumina, and the like. The carbon composite material has both high strength and lightness. Further, the carbon composite material has a higher thermal conductivity as compared with that of resin material (plastic material).

Further, the housing 10 is attached and fixed to the display unit 100. For example, the display unit 100 is bonded and fixed to the frame member 40 using an adhesive (adhesive tape). The display unit 100 may be fixed to the forefront surface 13 of the housing 10 or the inner wall of the inside of the forefront surface 13 using an adhesive. The forefront surface 13 of the housing 10 and the surface (front surface) of the display unit 100 have substantially the same height, and thus have a flush surface. By burying the display unit 100 to the height of the forefront surface 13 of the housing 10, it is possible to reduce the thickness.

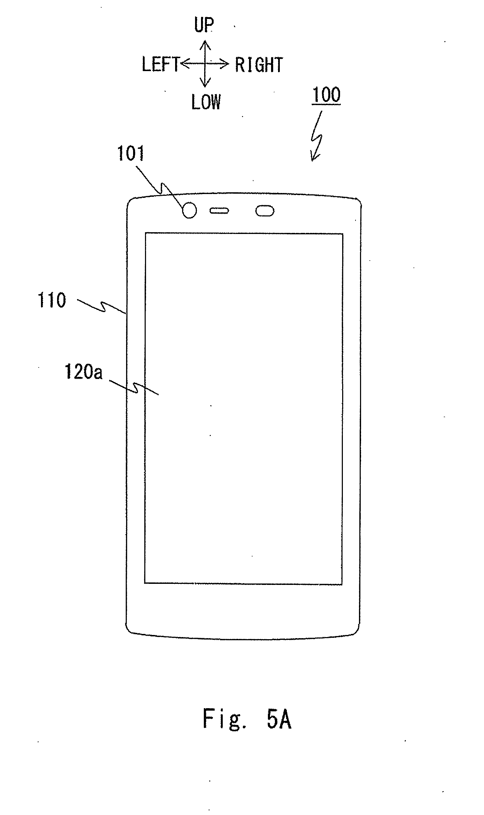

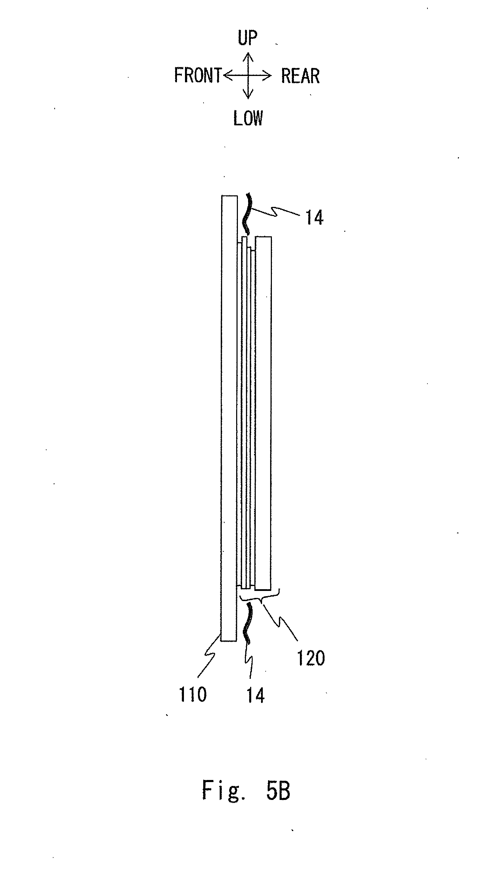

Fig. 5A is a front diagram of the display unit 100 according to the embodiment, Fig. 5B is a side diagram thereof.

As shown in Figs 5A and 5B, the display unit 100 includes a LCD module (liquid crystal display device) 120, and a touch panel 110 disposed on the front surface (the front side) of the LCD module 120. Note that in the side of the front surface of the LCD module 120, a panel made of glass or plastic without a touch panel function may be provided, instead of providing the touch panel 110.

The touch panel 110 and the LCD (Liquid Crystal Display) module 120 are joined together with an adhesive or the like. The entire surface of the LCD module 120 is joined to the central part of the back surface of the touch panel 110, and the region of the surface of the LCD module 120 that is viewed through the touch panel 110 serves as the display area 120a.

In the periphery part of the back surface of the touch panel 110, the double-sided adhesive tape 14 is placed in order to bond together the housing 10 and the frame member 40. Here, the double-sided adhesive tape 14 is used, but it may be any adhesive or the like, provided that the housing 10 and the frame member 40 can be joined together.

The touch panel 110 outputs a detection signal for detecting the position of the user's touched finger using a capacitance or the like. For example, the touch panel 110 has an electrode portion on the surface thereof, and has lead wires on the back thereof. The touch panel 110 is connected to the substrate 30 via the lead wires (not shown).

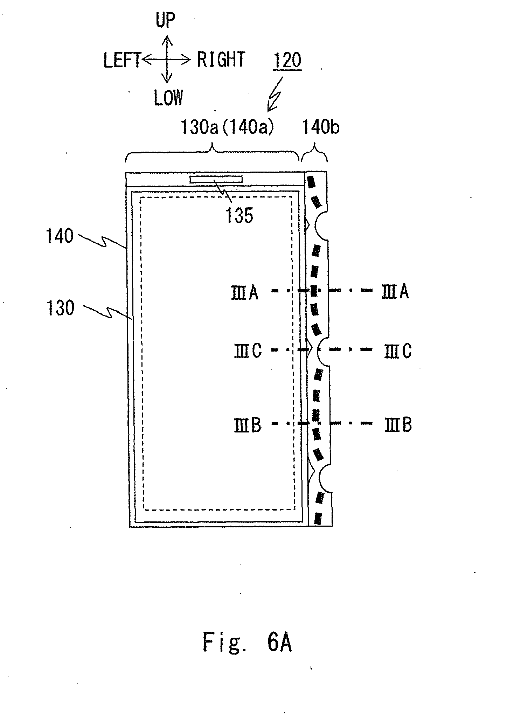

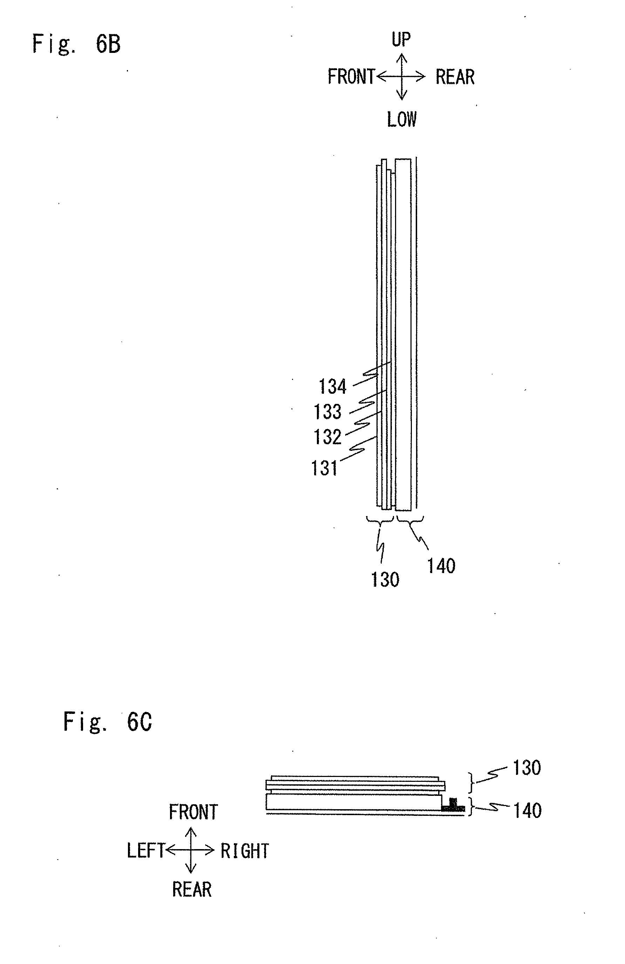

Fig. 6A is a front diagram of the LCD module 120 according to the embodiment, and Fig. 6B is a right side diagram thereof. Further, Fig. 6C is a side diagram of the lower of the LCD module 120.

As shown in Figs. 6A - 6C, an LCD module 120 includes a LCD panel (liquid crystal display panel) 130 and a backlight unit (light guide plate unit) 140 that is disposed on the back side (rear side) of the LCD panel. The LCD panel 130 and the backlight unit 140 are joined together with an adhesive or the like.

For example, the LCD panel 130 is composed from glass substrates 132 and 133, and polarizing plates 131 and 134. A color filter or the like is formed on the inner surface of the glass substrate 132. Further, TFT (Thin Film Transistor) or the like is formed on the inner surface of the glass substrate 133, and the liquid crystal is sealed between the glass substrate 132 and the glass substrate 133. Further, the polarizing plates 131 and 134 are bonded on surfaces of both sides of the glass substrates 132 and 133 in such a state that their polarization axis are mutually orthogonal.

Further, in the LCD panel 130, a drive circuit 135 for driving the LCD panel is mounted. A flexible cable (not shown) is connected to the drive circuit 135, and the driving circuit 135 and the substrate 30 are connected via the flexible cable. In this example, the driving circuit 135 is disposed in an upper end portion of the LCD panel 130, and, for example, is mounted on the glass substrate 132 or 133.

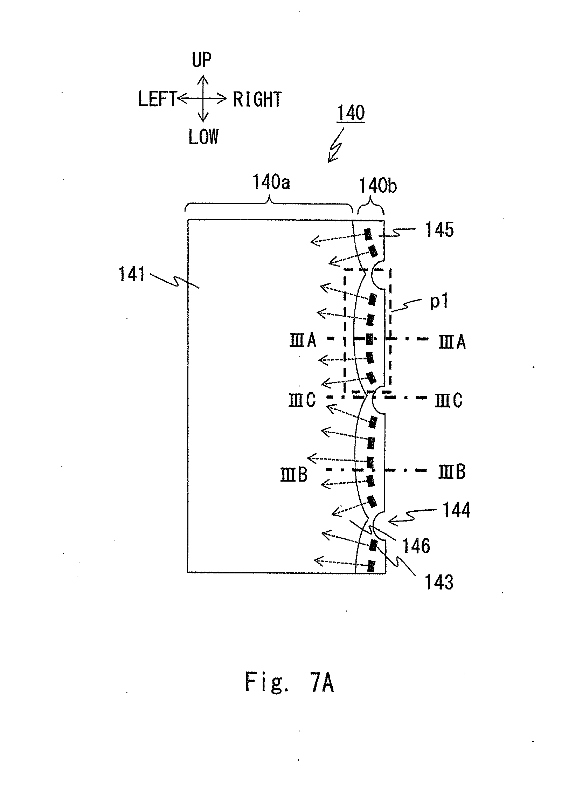

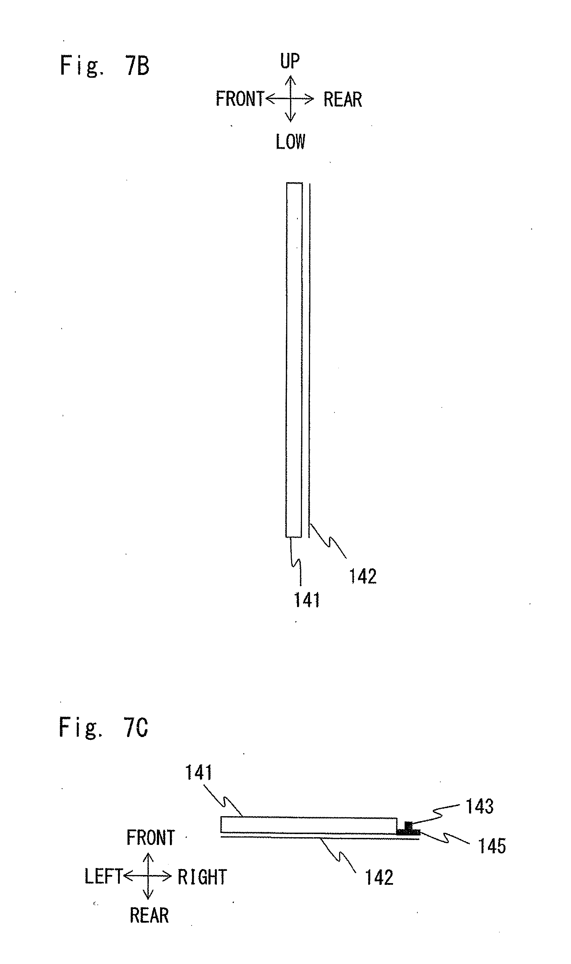

Fig. 7A is a front diagram of the backlight unit 140 according to the embodiment, and Fig. 7B is a right side diagram thereof. Further, Fig. 7C is a side diagram of the lower of the backlight unit 140.

As shown in Figs 7A - 7C, the backlight unit 140 is a planar-like light source device using the side light (edge light) method, and includes a light guide plate 141 that is disposed in a light guide plate disposition area 140a, a reflection sheet 142 that is disposed in the light guide plate disposition area 140a and a light source disposition area 140b, and light sources (light emitting portions) 143 that are disposed in the light source disposition area 140b. Note that an optical sheet such as a diffusion sheet and a prism sheet may be provided between the light guide plate 141 and the LCD panel 130.

The plurality of light sources 143 are disposed in the light source disposition area 140b extending along one side of the light guide plate 141. The light sources 143 are point light sources such as LEDs, and emit a point-like light to the side of the light guide plate 141.

The light sources 143 are mounted on an FPC substrate (flexible substrate) 145 by soldering or the like, and the FPC substrate 145 is bonded on the reflection sheet 142 by a double-sided tape. The FPC substrate 145 extends along the whole of the light source disposition area 140b. In addition, the FPC substrate 145 is connected to lead wiring, and is connected to a drive circuit for driving the light source through the lead wiring (not shown). Note that the light sources 143 and the FPC substrate 145 are fixed to the reflection sheet 142 in this example, but may instead be fixed to the side of the touch panel or other parts. In order to prevent the light sources from being moved when the user touches the touch panel, they are preferably fixed to the side of the reflective sheet rather than being fixed to the side of the touch panel.

The reflection sheet 142 is joined to the back surface of the light guide plate 141, and is provided from the light guide plate disposition area 140a to the light source disposition area 140b. The light guide plate 141 and the light sources 143 are fixed through the reflection sheet 142. The reflection sheet 142 reflects the light emitted from the light sources 143 to the side of the light guide plate 141 and thereby guides the light to the light guide plate 141.

The light guide plate 141 has a size corresponding to the back surface of the LCD panel 130. The light that is emitted from the light sources 143 is guided to the light guide plate 141 through the reflection sheet 142 or directly to the light guide plate 141, and is refracted by the prism surface to be converted into a planar light having a predetermined width. Then the converted planar-like light is emitted to the entire back surface of the LCD panel 130. The video images or text are displayed at a predetermined brightness by illumination of the planar-like light in the LCD panel 130.

In the backlight unit 140 of the side light method, the light sources 143 may be placed on the lower side surface (short side) of the light guide plate 141 or the like. That is, the light sources 143 are not limited to being placed on the right side surface (the long side) of the light guide plate 141. For example, in the case of a small liquid crystal display device, such as one having a size of 3 inches or 4 inches, it is possible to uniformly illuminate the entire surface of the light guide plate 141 when the light sources 143 are disposed on the lower surface of the light guide plate 141. However, in the case of a liquid crystal display device having a size of 7 inches or larger as in this embodiment, unevenness in illumination occurs because the light emission amount is reduced in the upper area of the light guide plate 141 when the light sources 143 are placed on the lower surface of the light guide plate 141. Therefore, in order to place the light sources 143 on the lower surface of the light guide plate 141 and to reduce unevenness in illumination, it is necessary to increase the thickness of the light guide plate 141, thus making it difficult to reduce the thickness of the mobile terminal device.

Therefore, in this embodiment, by disposing the light sources 143 on the side surface of the right (the long side) of the light guide plate 141, it is possible to suppress the occurrence of unevenness in illumination and prevent the light guide plate from becoming thicker. That is, in order to reduce the thickness of the backlight unit and ensure light amount of the whole of large LCD, the light sources 143 are arranged along the long side of the light guide plate 141.

Further, as described above, the light source disposition area 140b is disposed in a region overlapping the frame member 40 (right longitudinal frame 40b). Therefore, the light source disposition area 140b and the screws 45 that fixes the frame member 40 to the housing 10 interfere with each other.

Thus, in this embodiment, in order to avoid (escape) interference between the light source disposition area 140b and the screws 45, a semicircular cutout 144 is provided in the light source disposition area 140b. That is, a part of the reflection sheet 142 (FPC substrate 145) of the light source disposition area 140b corresponding to the screws 45 for fixing the frame member 40 is cut off and the cutout (cutout part) 144 is thereby formed.

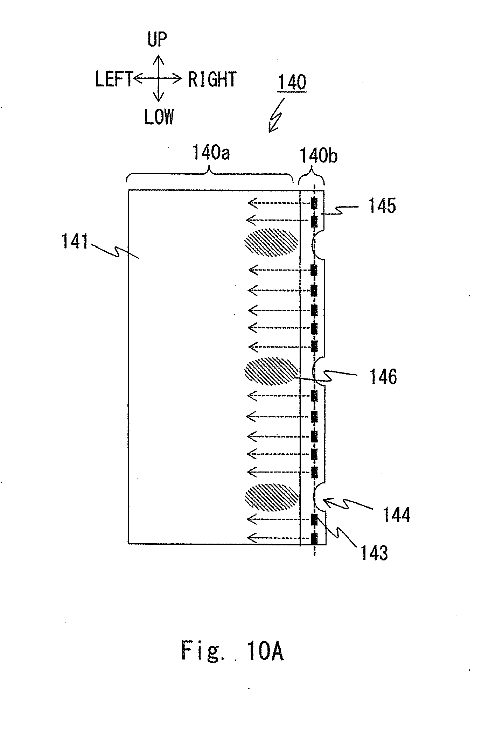

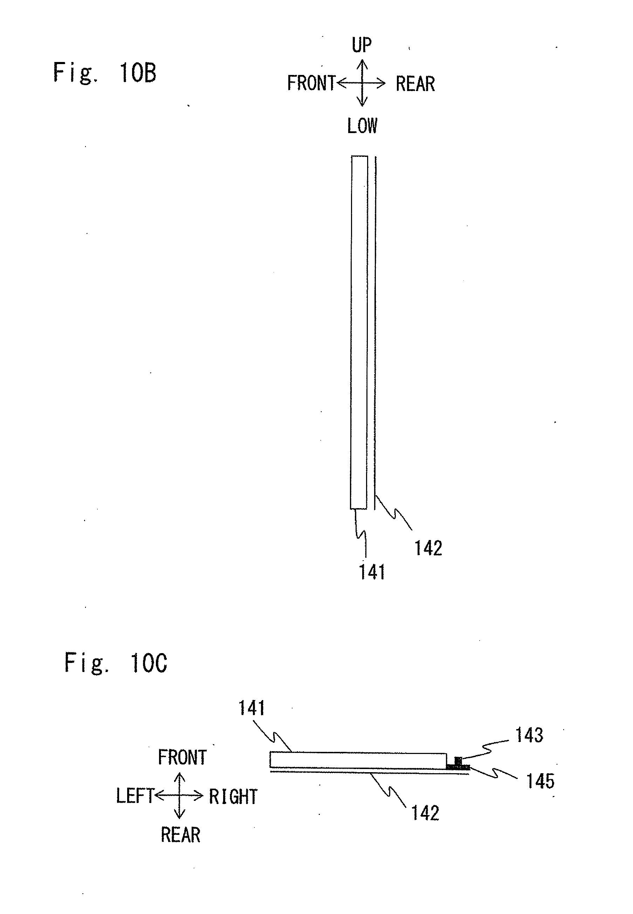

Now, referring to Figs. 10A - 10C, a reference example of the back light unit that has the cutout 144 will be explained. In the backlight unit of the reference example, a plurality of the cutouts 144 are formed in the light source disposition area 140b. The right end of the light guide plate 141 is formed linearly in the upper-lower direction. The light sources 143 are arranged along a straight line in the upper-lower direction parallel to the right end of the light guide plate 141. Since the cutouts 144 are formed on the straight line which should be disposed the light sources 143, it is impossible to place the light sources 143 in the cutouts 144. Thus, it is impossible to secure the regular intervals between the light sources 143. Therefore, in the area 146 of the light guide plate 141 facing each of the cutouts 144, light amount of area 146 is lower than that of other area of the light guide plate 141 and brightness unevenness occurs because light is not emitted from the light sources 143.

Then, in this embodiment, as shown in Figs. 7A - 7C, the light sources 143 are arranged to tilt as the distance to the cutouts 144 becomes shorter. Further, the right end of the light guide plate 141 is also cut out in an arc shape. Thus, since the light from the light sources 143 is guided in the area 146 of the light guide plate 141 facing the cutouts 144, it is possible to suppress uneven brightness in the portion surrounding each of the cutouts 144.

That is, in the light guide plate 141, the cutouts 144 are formed on the side adjacent to the light sources 143. By forming the elliptical cutouts 144 in the respective front portions (emission direction) of the light sources 143, spreading of the light that is emitted from the light sources 143 and guided through the light guide plate 141 is controlled so that the illumination becomes uniform. The shape of the cutouts 144 formed on the light guide plate 141 may be a rectangular or triangular. That is, it is not limited to being the oval shape to control the spatial spread of the light from the light sources 143.

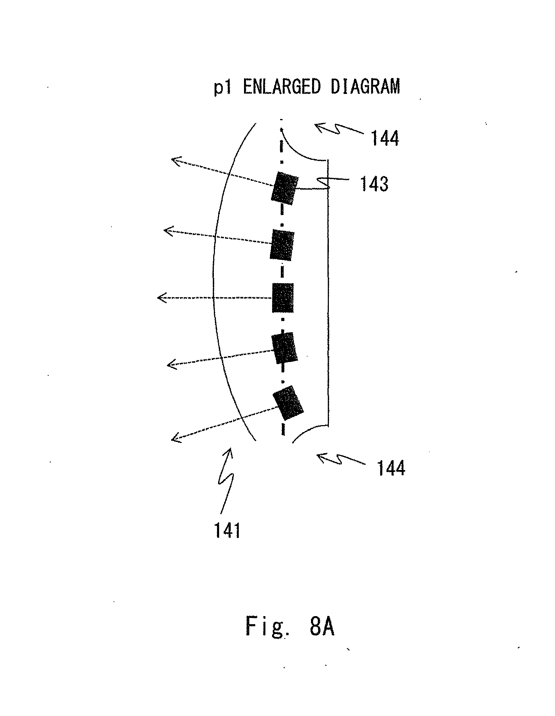

Figs. 8A - 8C are an enlarged diagram of part p1 of the light source disposition area 140b of the backlight unit 140 shown in Figs 7A - 7C. In this embodiment, at least the light sources 143 in the vicinity of the cutouts 144 are arranged so that the outgoing light is guided to the light guide plate (area 146) in the vicinity of the cutouts 144.

In the example of Fig.8A, the light sources 143 are disposed on a straight line extending in the upper-lower direction, and are arranged to be inclined as the distance to the cutouts 144 becomes shorter. In other words, the light sources 143 are arranged in a circular fashion as the distance to the cutout 144 becomes shorter. That is, the light sources 143 near the cutouts 144 are arranged to be inclined obliquely with respect to the upper-lower direction (the long side direction or the extending direction of the light guide plate), and the emission direction of the light sources 143 is inclined obliquely with respect to the left-right direction (the direction toward the end surface of the light guide plate). By tilting the light sources 143 near the cutouts 144, it is possible to suppress the uneven brightness because the light from the light sources 143 is emitted toward the side of the cutouts 144. The inclination of the light sources 143 becomes larger as they become nearer to the cutouts 144, by changing the inclination of the light sources 143 gradually and continuously according to the distance to the cutouts 144 (as the light sources 143 become further away from the cutouts 144). Therefore, it is possible to suppress the occurrence of uneven brightness. The right end of the light guide plate 141 has become a circular arc shape. Since the light sources 143 are inclined so as to correspond to the arc shape, it is possible to efficiently guide the light because the right end surface of the light guide plate 141 and the emission direction of the light sources 143 are substantially perpendicular to each other. In this case, since the light sources 143 are placed on a straight line, it is possible to shorten the width of the backlight unit 140.

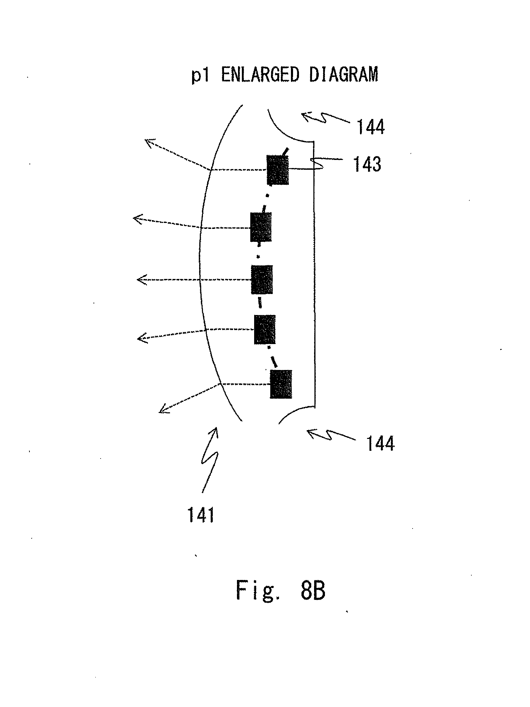

In the example of Fig. 8B, the direction of the light sources 143 is not tilted, and the light sources 143 are disposed in a curved arc corresponding to the arc shape of the right end of the light guide plate 141. In other words, the light sources 143 become further away from the area where the light guide plate is disposed as the light sources 143 become nearer to the cutouts 144. That is, the light sources 143 near the cutouts 144 are arranged at positions that are oblique with respect to the upper-lower direction as viewed from an adjacent disposed light source. It is possible to maintain a constant distance between the right end of the light guide plate 141 and the light sources 143, thereby improving the uneven brightness. The inclination of the arrangement position of the light sources as viewed from an adjacent light source becomes larger as the light sources become nearer to the cutouts 144 since this inclination is changed gradually and continuously as the light sources 143 become nearer to the cutouts 144. Therefore, it is possible to suppress the occurrence of uneven brightness. Further, since the right end of the light guide plate 141 is a circular arc shape, it is possible to refract the light from the light sources 143 at the right end surface of the light guide plate 141 and thereby to guide the light into the side of the cutouts 144. In this case, since it is unnecessary to control the inclination for mounting the light sources 143, the light sources 143 can be easily mounted on the FPC substrate.

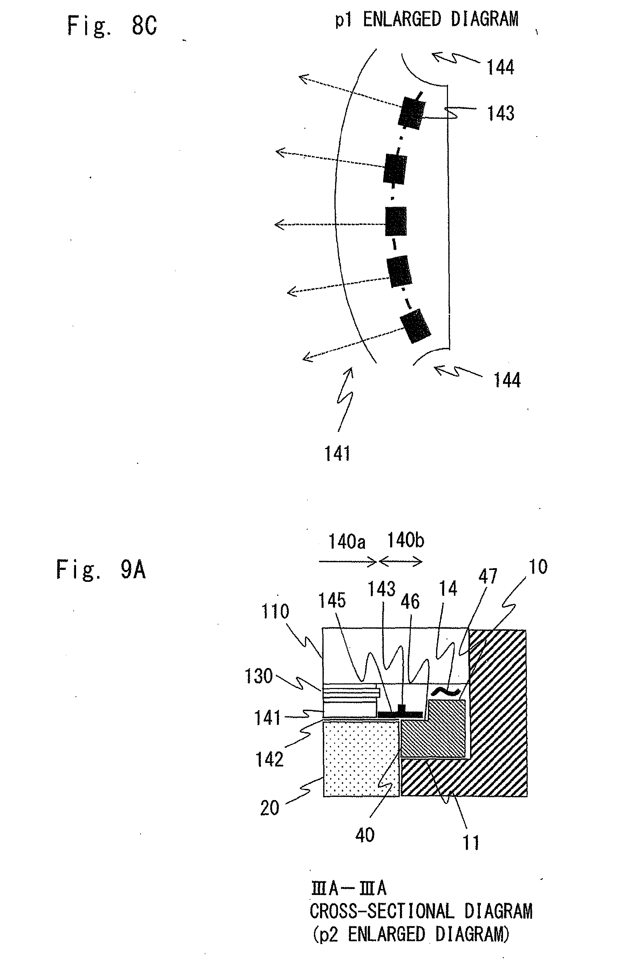

In the example of Fig. 8C, the light sources 143 are arranged on the arcuate curve corresponding to the arc shape of the right end of the light guide plate 141, and are tilted as they become nearer to the cutouts 144. In other words, the light sources 143 are arranged in a circular fashion and they become further away from the light guide plate disposition area as they becomes nearer to the cutouts 144. By maintaining a constant distance between the right end of the light guide plate 141 and the light sources 143 while the light from the light sources 143 is emitted toward the side of the cutouts 144, it is possible to suppress uneven brightness of the surrounding area of the cutouts 144 as much as possible. The right end of the light guide plate 141 has become a circular arc shape, since the light sources 143 are inclined so as to correspond to the arc shaped. Therefore, it is possible to guide the light efficiently because the right end surface of the light guide plate 141 and the emission direction of the light sources 143 are substantially perpendicular to each other.

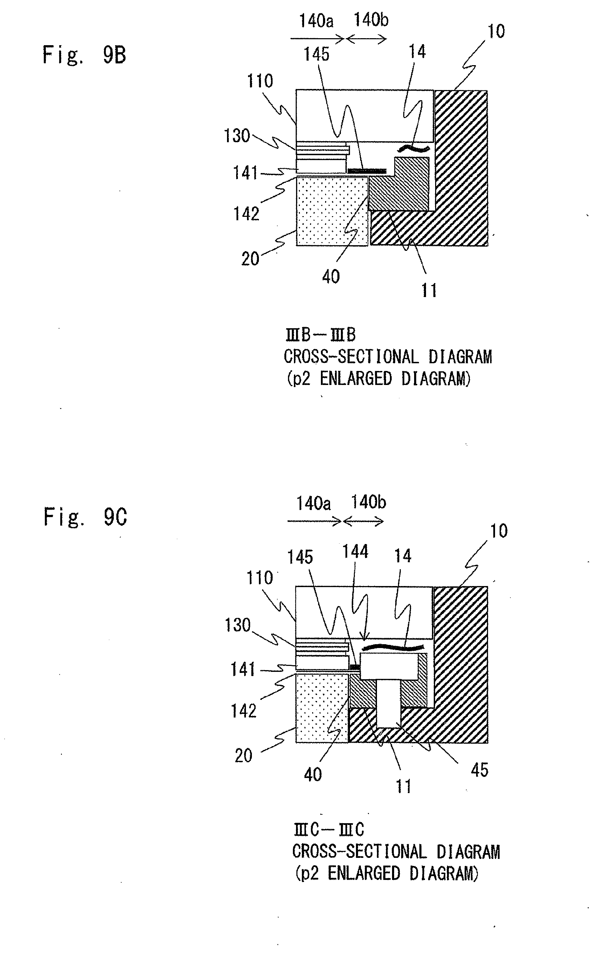

Figs 9A - 9C are an enlarged diagram of part p2 of Fig. 4. In particular, Fig. 9A is a cross-sectional diagram of IIIA - IIIA in Figs. 3A, 3B, 6A -6C, and 7A - 7C, and Fig. 9B is a cross-sectional diagram of IIIB - IIIB in Figs. 3A, 3B, 6A - 6C, and 7A - 7C. Further, Fig. 9C is a cross-sectional diagram of IIIC - IIIC in Figs. 3A, 3B, 6A -6C, 7A - 7C.

As shown in Figs. 9A - 9C, the frame member 40 (frame 40b) is fixed to the surface (front surface) of a fixed part 11 of the housing 10, and the battery 20 is fixed to the inside of the frame member 40. The height of the surface of the thin part 46 of the frame 40b and the height of the surface of the battery 20 are substantially the same. The touch panel 110 to which the LCD panel 130 and the backlight unit 140 are adhered is fixed to the frame member 40 and the housing 10 by the double-sided adhesive tape 14.

As shown in Fig. 9A, in the portion where the light sources 143 are disposed, the back surface (rear surface) of the touch panel 110 and surface (front surface) of the thick part 47 are bonded by a double-sided adhesive tape 14. Since the touch panel 110 is fixed, the backlight unit 140 is disposed so as to overlap the surface (front surface) of the battery 20 and the thin part 46 of the frame member. In particular, the light source disposition area 140b is provided across the battery 20 and the thin part 46. The FPC substrate 145 (reflection sheet 142) is disposed across the battery 20 and the thin part 46, and the light sources 143 are disposed through the FPC substrate 145 in the center of the light source disposition area 140b. That is, the light sources 143 are disposed near the boundary of the battery 20 and the frame member 40.

As shown in Fig. 9B, in the portion where the light sources 143 are not disposed, the back surface (rear surface) of the touch panel 110 and the surface (front surface) of the thick part 47 are bonded by a double-sided adhesive tape 14. Since the touch panel 110 is fixed, the backlight unit 140 is disposed so as to overlap the surface (front surface) of the battery 20 and the thin part 46. In particular, the light source disposition area 140b is provided across the battery 20 and the thin part 46. The FPC substrate 145 (reflection sheet 142) is disposed across the battery 20 and the thin portion 46.

As shown in Fig. 9C, in the portion where the cutouts 144 are formed, the back surface (rear surface) of the touch panel 110 and the surface (front surface) of the thick part 47 are bonded by a double-sided adhesive tape 14. Because the portion where the cutouts 144 are formed also serves as a portion for fixing the frame member 40 by the screws 45, the surface (front surface) of the respective heads of the screws 45 and the touch panel 110 are bonded there. By providing the screws 45 for joining the frame member 40 and the housing 10 in the cutouts 144, it is possible not only to reduce the device width according to the size of the screw 45, but also to achieve both a reduction in thickness of the backlight and a reliable and even light quantity of the entire large LCD. Note that in order to bond the touch panel 110 to the head of the screws 45, the head surface of each of the screws 45 is preferably substantially horizontal.

Since the touch panel 110 is fixed, the backlight unit 140 is disposed so as to overlap the battery 20 and the surface (front surface) of the thin part 46 of the frame member. Since the cutouts 144 are provided, the light source disposition area 140b is provided in a portion of the thin part 46 that does not overlap the screws 45. In the light source disposition area 140b in which the cutouts 144 are located, the FPC substrate 145 (reflection sheet 142) is disposed in the thin part 46.

As described above, in the mobile terminal device having a liquid crystal display device, in order to be able to reduce the thickness and increase the screen size of the liquid crystal display device, it is configured so that the light source is disposed on the long side thereof. Further, since the number of screws for fixing the frame member to the housing is increased for a large screen, cutouts are provided in the light source disposition area corresponding to the respective positions of the screws. Therefore, it is possible to avoid interference between the light source disposition area and the screws and thereby to reduce the thickness even more. Then, by placing and tilting the light sources near the cutouts of the light source disposition area, it is possible to suppress unevenness in illumination that would otherwise occurs in the area of the light guide plate facing the cutouts.

Note that the present invention is not limited to the above embodiments, and can be appropriately modified without departing from the scope of the invention.

For example, in the above embodiment, the light sources are disposed on only one side of the right of the light guide plate. However, the light sources may be disposed on the other side of the plate. By placing the light sources on both sides, i.e., on the left side and right side of the light guide plate, it is possible to suppress the occurrence of unevenness in illumination even when the screen becomes even larger. Note that when the light sources are disposed on both sides of the light guide plate, the cutouts on both of these sides may be provided at positions facing each other. Alternatively, the cutouts on both of these sides may be provided at staggered positions. By staggering the positions of the cutouts on both sides of the light guide plate, it is possible to guide the light from the light sources to the side opposite to the cutouts and thereby to suppress the uneven brightness.

Further, in the above embodiment, the cutouts are provided at respective positions corresponding to the screws for fixing the frame member. However, they may be provided at positions corresponding to the other portions of the mobile terminal device. That is, they are not limited to being provided where the screws are positioned. When there are members that could interfere with other components in the light source disposition area in the housing, at least, it is possible to reduce the thickness of the mobile terminal device by providing the cutouts at respective positions corresponding to the members that may interfere with other components.

Furthermore, in the above embodiments, the liquid crystal display device (LCD module) for displaying by the liquid crystal display panel (LCD panel) is explained. However, the present invention is not limited to a display device having a panel in which liquid crystals are sealed. It may be any display device which performs a display by emitting the light from the light sources to the display panel.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

The present application claims priority based on Japanese Patent Unexamined Application No. 2012-054244, filed on March 12, 2012, the disclosure of which is incorporated herein in its entirety.

### Reference Signs List

- 1: MOBILE TERMINAL DEVISE
- 10: HOUSING
- 10a: CAVITY PART
- 11: FIXED PART
- 12: MOUNTING HOLE
- 13: FOREFRONT SURFACE
- 14: DOUBLE-SIDED ADHESIVE TAPE
- 20: BATTERY
- 30: SUBSTRATE
- 31, 32, 33: CIRCUIT ELEMENTS
- 40: FRAME MEMBER
- 40a: LEFT LONGITUDINAL FRAME (LONGITUDINAL FRAME)
- 40b: RIGHT LONGITUDINAL FRAME (LONGITUDINAL FRAME)
- 40c: UPPER TRANSVERSE FRAME (TRANSVERSE FRAME)
- 40d: LOWER TRANSVERSE FRAME (TRANSVERSE FRAME)
- 41, 42: OPENING PARTS
- 43: FIXED PART
- 44: MOUNTING HOLE
- 46: THIN PART
- 47: THICK PART
- 100: DISPLAY UNIT
- 101: HOLE
- 110: TOUCH PANEL
- 120: LCD MODULE
- 120a: DISPLAY AREA
- 120b: LCD MODULE DISPOSITION AREA
- 130: LCD PANEL
- 130a: LCD PANEL DISPOSITION AREA
- 131, 134: POLARIZING PLATES
- 132, 133: GLASS SUBSTRATES
- 135: DRIVING CIRCUIT
- 140: BACKLIGHT UNIT
- 140a: LIGHT GUIDE PLATE DISPOSITION AREA
- 140b: LIGHT SOURCE DISPOSITION AREA
- 141: LIGHT GUIDE PLATE
- 142: REFLECTION SHEET
- 143: LIGHT SOURCE
- 145: FPC SUBSTRATE
- 146: AREA

## Claims

1. A display device comprising:
a light guide plate disposition area where a light guide plate that emits a planar-like light to a back surface of a display panel is disposed , and
a light source disposition area where a plurality of light sources that emit a point-like light to the side of the light guide plate are disposed,
wherein the light source disposition area includes a cutout part, and
a light source near the cutout part from among the plurality of the light sources is disposed so that the light emitted from the light source is guided to the light guide plate located near the cutout part.

2. The display device according to Claim 1, wherein the light source near the cutout part is disposed so that an emitting direction of the light source is directed to the light guide plate near the cutout part.

3. The display device according to Claim 1 or 2, wherein the light source near the cutout part is disposed so that an emitting direction of the light source is inclined obliquely with respect to a direction perpendicular to the extending direction of the light guide plate.

4. The display device according to Claim 3, wherein a plurality of the light sources near the cutout part are disposed so that an inclined angle of the emitting direction of the light sources is increased as the light sources become nearer to the cutout part.

5. The display device according to Claim 4, wherein a plurality of the light sources near the cutout part are arranged in a row on a straight line along the extending direction of the light guide plate.

6. The display device according to any one of Claims 1 to 5, wherein the light source near the cutout part is disposed at a position that is inclined obliquely with respect to the extending direction of the light guide plate as viewed from an adjacent light source disposed.

7. The display device according to Claim 6, wherein a plurality of the light sources near the cutout part are disposed so that an inclined angle of the disposed position of the light sources is increased as the light sources become nearer to the cutout part.

8. The display device according to Claim 7, wherein a plurality of the light sources near the cutout part are arranged in a circular arc pattern.

9. The display device according to any one of Claims 1 to 8, wherein the cutout part is formed so as to avoid contact with a mounting part disposed inside a mounting device in which the display device is disposed.

10. A display device comprising:
a light guide plate disposition area where a light guide plate that emits a planar-like light to a back surface of a display panel is disposed, and
a light source disposition area where a plurality of light sources that emit a point-like light to the side of the light guide plate are disposed,
wherein the light source disposition area includes a cutout part,
a light source near the cutout part from among the plurality of the light sources is disposed so that an emission direction of the light source is inclined obliquely with respect to a direction perpendicular to the extending direction of the light guide plate.

11. A display device comprising:
a light guide plate disposition area where a light guide plate that emits a planar-like light to a back surface of a display panel is disposed, and
a light source disposition area where a plurality of light sources that emit a point-like light to the side of the light guide plate are disposed,
wherein the light source disposition area includes a cutout part,
a light source near the cutout part from among the plurality of the light sources is disposed so as to be inclined obliquely with respect to the extending direction of the light guide plate as viewed from an adjacent light source.

12. A mobile terminal device comprising:
a housing having a cavity part,
a frame member that is fixed to the housing through the cavity part,
a substrate and a battery that are fixed to the frame member through the cavity part, and
a display unit that seals the cavity part with the housing,
wherein the display unit comprising:
a light guide plate disposition area where a light guide plate that emits a planar-like light to a back surface of a display panel is disposed, and
a light source disposition area where a plurality of light sources that emit a point-like light to the side of the light guide plate are disposed,
wherein the light source disposition area includes a cutout part, and
a light source near the cutout part from among the plurality of the light sources is disposed so that the light emitted from the light source is guided to the light guide plate near the cutout part.

13. The mobile terminal device according to Claim 12, wherein the light source near the cutout part is disposed so that an emitting direction of the light source is directed to the light guide plate near the cutout part.

14. The mobile terminal device according to Claim 12 or 13, wherein the light source near the cutout part is disposed so that an emission direction of the light sources is inclined obliquely with respect to a direction perpendicular to the extending direction of the light guide plate.

15. The mobile terminal device according to Claim 14, wherein a plurality of the light sources near the cutout part are disposed so that an inclined angle of the emitting direction of the light sources is increased as the light sources become nearer to the cutout part.

16. The mobile terminal device according to Claim 15, wherein a plurality of the light sources near the cutout part are arranged in a row on a straight line along the extending direction of the light guide plate.

17. The mobile terminal device according to any one of Claims 12 to 16, wherein the light source near the cutout part is disposed at a position that is inclined obliquely with respect to the extending direction of the light guide plate as viewed from an adjacently disposed light source.

18. The mobile terminal device according to Claim 17, wherein a plurality of the light sources near the cutout part are disposed so that an inclined angle of the position of the light sources is increased as the light sources become nearer to the cutout part.

19. The mobile terminal device according to Claim 18, wherein a plurality of the light sources near the cutout part are arranged in a circular arc pattern.

20. The mobile terminal device according to any one of Claims 12 to 19, wherein the cutout part is formed so as to avoid contact with a fixed part that fixes the housing to the frame member.

21. The mobile terminal device according to any one of Claims 12 to 20, wherein the light source disposition area is an area extending from an upper part of the substrate or the battery to an upper part of the frame member.

22. The mobile terminal device according to any one of Claims 12 to 21, wherein
the display unit includes a touch panel fixed to the display surface of the display panel, and
the touch panel is fixed to the housing or the frame member.

23. The mobile terminal device according to Claim 22, wherein
the frame member includes a frame formed to include a thick part having a first thickness, and a thin part having a second thickness thinner than the first thickness,
the first thickness is the thickness extending from the housing to a vicinity of the touch panel,
the light source disposition area is an area overlapping the area where the thin part of the frame is disposed , and
the light source arrangement region is a region overlapping the region where the thin portion of the frame is arranged.

24. The mobile terminal device according to Claim 23, wherein
the height from the housing to the surface of the thin part of the frame is substantially the same as the height from the housing to the surface of the substrate or the battery.
